# EUROPÄISCHE PATENTSCHRIFT

(11) **EP 2 220 925 B1**
(45) Veröffentlichungstag und Bekanntmachung des Hinweises auf die Patenterteilung: **06.01.2016**
(21) Anmeldenummer: 09170184.7
(22) Anmeldetag: 14.09.2009
(51) Int. Cl.: A01D 41/127

(54) **Landwirtschaftliches Arbeitsfahrzeug und Anzeigeeinheit dafür**
Agricultural vehicle and display unit for same
Véhicule de travail agricole et unité d'affichage correspondante

(30) Priorität: 20.02.2009 DE 102009009817
(43) Veröffentlichungstag der Anmeldung: 25.08.2010
(73) Patentinhaber: CLAAS Selbstfahrende Erntemaschinen GmbH, 33428 Harsewinkel (DE)
(72) Erfinder: Baumgarten, Joachim, Dr., 48361, Beelen (DE); Fitzner, Werner, 48336, Sassenberg (DE); Neu, Sebastian, 49196, Bad Laer (DE)

(56) Entgegenhaltungen:
- EP-A1- 1 397 954
- EP-A1- 1 813 143
- EP-A1- 2 186 394
- DE-A1- 10 147 733

## Beschreibung

Die vorliegende Erfindung betrifft eine Anzeigeeinheit für ein landwirtschaftliches Arbeitsfahrzeug nach dem Oberbegriff des Anspruchs 1 sowie ein landwirtschaftliches Arbeitsfahrzeug, insbesondere einen Mähdrescher, in dem eine solche Anzeigeeinheit verwendet ist.

Landwirtschaftliche Arbeitsfahrzeuge wie beispielweise Traktoren, Mähdrescher, Feldhäcksler etc., verfügen in der Regel über eine Mehrzahl von Arbeitsaggregaten mit Einstellparametern, die durch eine automatische Steuerung oder durch eine Eingabe eines Bedieners an einem Bedienelement beeinflussbar sind. Bei modernen landwirtschaftlichen Arbeitsmaschinen sind die Funktion und/oder das Arbeitsergebnis einzelner Arbeitsaggregate oder einer Mehrzahl von zusammenwirkenden Arbeitsaggregaten wesentlich von der richtigen Festlegung der Einstellparameter der einzelnen Aggregate abhängig. Zwischen den einzelnen Aggregaten bestehen komplexe wechselwirkungen, die Einfluss auf das Arbeitsergebnis haben. Der Zusammenhang zwischen Einstellparametern der Aggregate und dem Arbeitsergebnis ist kompliziert und oft nicht linear, so dass es für eine automatische Steuerung und auch für einen geübten Bediener im Einzelfall schwierig abzuschätzen ist, wie sich eine von ihm vorgenommene Änderung an einem oder mehreren Einstellparametern der Arbeitsmaschine auf das Arbeitsergebnis auswirken wird. Erschwerend kommt hinzu, dass in vielen Fällen die Änderung eines Einstellparameters sich erst mit einer beträchtlichen und nicht unter allen Bedingungen gleichen Zeitverzögerung auf das Arbeitsergebnis auswirkt. Computergestützte Modelle der Arbeitsabläufe in der Arbeitsmaschine können zwar einem Bediener helfen, die Auswirkung einer Einstellparameteränderung im Voraus abzuschätzen, doch kann ein solches Modell nur dann eine exakte Prognose liefern, wenn alle relevanten Randbedingungen mit hinreichender Genauigkeit bekannt sind. Ist dies nicht der Fall, kann die modellgestützte Prognose sogar kontraproduktiv sein, da den Bediener der Maschine, wenn diesem die Prognoseergebnisse angezeigt werden, von einer Parameteränderung abhalten kann, die in Wirklichkeit durchaus geeignet wäre, das Arbeitsergebnis zu verbessern.

Egal ob ein Bediener die Einstellparameter festlegt oder ob eine automatische Steuerung basierend auf einem computergestützten Modell dies tut, bleibt dem Bediener die Aufgabe, zu kontrollieren, ob die gewählten Einstellparameterwerte zu einem befriedigenden Arbeitsergebnis führen. Um ihm dies zu ermöglichen, müssen ihm für die Qualität des Arbeitsergebnisses repräsentative Betriebsparameter in einer auf das Wesentliche reduzierten, übersichtliche Form dargeboten werden.

Aus der nachveröffentlichten EP 2 186 394 A1 ist eine Anzeigeeinheit zur Anzeige von Betriebsparametern bekannt, die in Form eines Tortendiagramms dargestellt werden. Veränderungen eines Wertes eines Betriebsparameters führen zu einer Positionsverärlderung des den Betriebsparameter repräsentierenden Tortensegmentes.

Aus der gattungsbildenden DE 101 47 733 A1 ist eine Anzeigeeinheit der eingangs genannten Art bekannt, welche Verlustanzeigen für Schüttler und Obersieb aufweist. In diesen Verlustanzeigen werden die jeweils aktuellen Verlustwsrte graphisch dargestellt. Eine Darstellung der qualitativen und quantitativen Veränderung der verlustwerte nach einer Einstellparameteränderang in Relati on zu den vorherigen Verlustwerten ist mit dieser Anzeigeform nicht möglich.

Die Aufgabe wird durch die Merkmale des Anspruchs 1 gelöst.

Da die Anzeigeeinheit eingerichtet ist, die Veränderung des Betriebsparameters durch gleichzeitige Darstellung eines Wertes des Betriebsparameters vor der Veränderung (qalt) und eines Wertes des Betriebsparameters nach der Veränderung (qist) darzustellen, kann der Bediener die Veränderung unmittelbar mit dem Betrag des Betriebsparameters in Beziehung setzen und so die Relevanz einer Veränderung besser einschätzen.

Eine Veränderungstendenz des Betriebsparameters wird unmittelbar augenfällig gemacht, indem eine dem Betriebsparameter zugeordnete, auf dem Anzeigeelement dargestellte erste Figur je nach Vorzeichen der Veränderung zwei diskrete Werte einer gegebenen Eigenschaft annimmt. Vorzugsweise ist diese Eigenschaft die Farbe oder ein Füllmuster der ersten Figur. so kann eine Verschlechterung des Betriebsparameters durch Garstellung der ersten Figur in roter Farbe und eine Verbesserung durch Darstellung in grüner Farbe dem Bediener sinnfällig deutlich gemacht werden.

Indem eine Abmessung der Figur für den Betrag der Veränderung des Betriebsparameters repräsentativ ist wird eine schnelle Beurteilung auch des Ausmaßes der Veränderung ermöglicht.

Durch Anzeigen einer zweiten Figur, deren Abmessung für, den jeweils kleineren der besagten Werte des Betriebsparameters repräsentativ ist, wird dem Bediener ermöglicht, die Änderung des Betriebsparameters relativ zu seinem Betrag einzuschätzen.

Die Abmessung kann eine Länge sein; dann ist es zweckmäßig, die Figuren in Richtung der Länge nebeneinander auf der Anzeigeeinheit anzuzeigen, so dass die Gesamtlänge der beiden Figuren dem größeren der beiden Werte des Betriebsparameters entspricht.

Als Abmessung kommt auch eine Fläche der Figuren in Betracht. Dann sind die Figuren zweckmäßigerweise aneinander angrenzend auf der Anzeigeeinheit dargestellt, so dass der gemeinsame Umriss beider Figuren dem größeren der beiden Werte des Betriebsparameters entspricht. Um den Vergleich zwischen den beiden Werten zu erleichtern, ist der gemeinsame Umriss der beiden Figuren vorteilhafterweise der zweiten Figur ähnlich.

Um die angezeigte Veränderung des Betriebsparameters laufend aktualisieren zu können, ist die Anzeigeeinheit zweckmäßigerweise mit wenigstens einem Sensor verbunden, der Messwerte des Betriebsparameters oder zumindest Werte, die eine Berechnung des Betriebsparameters in Echtzeit ermöglichen, liefert.

Zweckmäßigerweise ist über ein Bedienelement ein einzustellender Wert für wenigstens einen den Betriebsparameter beeinflussenden Einstellparameter des Fahrzeugs durch den Bediener eingebbar, und die Anzeigeeinheit ist eingerichtet, diejenige Veränderung des Betriebsparameters anzuzeigen, die aus einer am Bedienelement eingegebenen Veränderung des wenigstens einen Einstellparameters resultiert. Auf diese Weise wird automatisch immer dann, wenn der Bediener einen Versuch beginnt, den Betriebsparameter zu optimieren, ein geeigneter Bezugswert für die Darstellung der Veränderung gewonnen.

Zweckmäßigerweise umfasst die Anzeigeeinheit ein Speicherelement zum Speichern des Werts des Betriebsparameter zum Zeitpunkt der Eingabe der Veränderung des Einstellparameters am Bedienelement.

Vorzugsweise ist die Anzeigeeinheit auch eingerichtet, eine Änderung eines Einstellparameters an einem Arbeitsaggregat des Arbeitsfahrzeugs vorzunehmen. Wenn sie außerdem einen vor der Änderung gültigen ursprünglichen Wert des Einstellparameters speichert, kann sie in Reaktion auf einen Rücksetzbefehl des Bedieners diesen ursprünglichen Wert wieder einstellen. Daher ist es nicht erforderlich, dass sich der Bediener den ursprünglichen Wert jedes veränderten Einstellparameters selbst merkt, um ihn anschließend wenn nötig quantitativ wieder einstellen zu können; es genügt die einfache Eingabe des Wunsches des Bedieners nach Wiederherstellung des Ausgangszustandes, egal welche Einstellparameterwerte diesem entsprechen.

Wenn der Bediener nach einer bestimmten Zeit eine Einstellparameteränderung nicht rückgängig gemacht hat, kann davon ausgegangen werden, dass er sie beibehalten will. In diesem Fall, oder auch auf einen ausdrücklichen Befehl des Bedieners hin, ist es zweckmäßig, dass die Anzeigeeinheit den gespeicherten Wert des Einstellparameters durch den veränderten Wert ersetzt, so dass dieser letztere wieder eingestellt werden kann, falls eine spätere erneute Änderung erfolglos bleibt.

Wenn der Wert des Betriebsparameters gespeichert worden ist, ist in der Steuereinheit zweckmäßigerweise ein erneutes Speichern des Werts dieses Parameters während einer vorgegebenen Zeitspanne oder bis zur Eingabe eines Freigabebefehls durch den Bediener gesperrt. Die Sperrung ermöglicht es dem Bediener, innerhalb der vorgegebenen Zeitspanne auch mehrere Einstellparameter zu variieren, um die Auswirkung einer solchen kombinierten Änderung auf den Betriebsparameter beobachten zu können. Ein Rücksetzbefehl des Bedieners wirkt sich in diesem Fall zweckmäßigerweise auf sämtliche gespeicherten Einstellparameterwerte aus, so dass auch in einem solchen Fall die Gesamtheit der Einstellparameter, die den gespeicherten Wert des Betriebsparameters ergeben haben, exakt wiederhergestellt werden kann. Ein Freigabebefehl durch den Bediener wird zweckmäßigerweise dann gegeben, wenn eine Änderung eines Einstellparameters zu einer Verbesserung des Betriebsparameters geführt hat und der daraus resultierende neue Wert des Betriebsparameters als Referenz für die weitere Optimierung verwendet werden soll.

Gegenstand der Erfindung ist ferner ein landwirtschaftliches Arbeitsfahrzeug, insbesondere ein Mähdrescher, mit einer Anzeigeeinheit der oben beschriebenen Art.

Ein Arbeitsaggregat, auf das sich die ein oder mehreren Einstellparameter beziehen, kann bei einem Mähdrescher insbesondere unter Dreschkorb, Sieb- und Reinigungsgebläse und der Einstellparameter unter Dreschkorbweite, Siebkorbweite und Gebläseleistung ausgewählt sein. Als Betriebsparameter kommen insbesondere für die Arbeitsqualität des Arbeitsfahrzeugs repräsentative Parameter wie etwa die Ernteleistung oder, im Falle eines Mähdreschers, Kornverlust, Bruchkornanteil und Überkehrmenge in Betracht.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine schematische Seitenansicht eines Mähdreschers;
- Fig. 2: ein Flussdiagramm zur Veranschaulichung der Arbeitsweise der Anzeigeeinheit; und
- Fig. 3a und 3b: Anzeigebilder auf einem Bildschirm der Anzeigeeinheit in einem Normalbetriebsmodus bzw. einem Optimierungsbetriebsmodus.

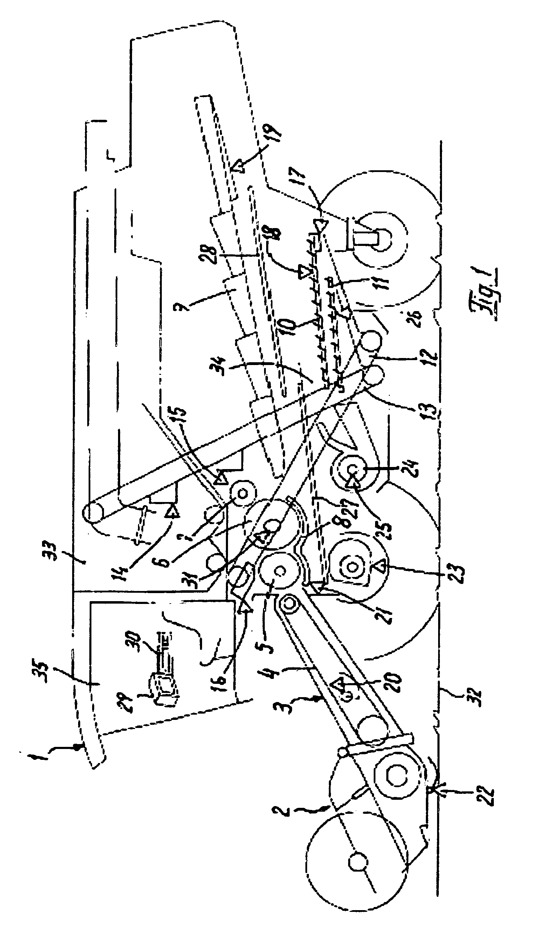

In der Fig. 1 wird beispielhaft eine schematisierte Seitenansicht eines als Mähdreschers 1 ausgebildeten landwirtschaftlichen Arbeitsfahrzeuges gezeigt. Aufgabe eines Mähdreschers 1 ist es, auf Halmen wachsendes Erntegut von einer Bearbeitungsfläche 32 aufzunehmen und von dem Stroh und weiteren Beimengungen zu trennen. Zur Aufnahmen des Erntegutes ist in der Fig. 1 beispielsweise ein Getreideschneidwerk 2 dargestellt. Dieses schneidet die Ernteguthalme mit dem in den Ähren befindlichen Erntegut von der Bearbeitungsfläche 32 ab und führt es anschließend auf die Breite des als Einzug dienenden Schrägförderers 3 zusammen. In dem Schrägförderer 3 befinden sich umlaufende Einzugsketten 4 mit Querstegen, die das Erntegut den nachgeordneten Dreschaggregaten 5,6 zuführen. Das Erntegut wird von der Vorbeschleunigertrommel 5 am Ende des Schrägförderers 3 abgenommen und entlang des Umfangs der Vorbeschleunigertrommel 5 zwischen der Vorbeschleunigertrommel 5 und dem Dreschkorb 8 beschleunigt. Das beschleunigte Erntegut wird dann an die Dreschtrommel 6 übergeben und weiter beschleunigt. Durch die schlagende und reibende Wirkung der Vorbeschleunigertrommel 5 sowie der Dreschtrommel 6 und die auf das Erntegut wirkende Zentrifugalkraft wird das Erntegut aus den Ähren und vom Stroh getrennt und gelangt dann durch den für das Erntegut durchlässigen Dreschkorb 8 auf den Vorbereitungsboden 27. Das von der Dreschtrommel 6 abgegebene Stroh wird durch eine Wendetrommel 7 abgebremst und auf mehrere über die Arbeitsbreite nebeneinander angeordnete Schüttler 9 umgelenkt. Die Schwingbewegung der Schüttler 9 sowie deren stufenförmige Ausbildung bewirken eine Förderung des Strohs zum hinteren Ende des Mähdreschers hin sowie eine Abscheidung des noch im Stroh befindlichen Erntegutes. Diese Restmenge wird durch einen schwingend bewegten Rücklaufboden 28 ebenfalls auf den Vorbereitungsboden 27 übergeben.

Das auf dem Vorbereitungsboden 27 befindliche Erntegut mit weiteren Beimengungen, wie Strohstücke, Spreu und Ährenteile, wird durch eine Schwingbewegung desselben und dessen stufenförmige Ausbildung separiert und den nachfolgenden Reinigungsaggregaten 10,11,24 zugeführt. Die Übergabe erfolgt über eine von dem Reinigungsgebläse 24 angeblasene Fallstufe 34 auf das Obersieb 10. Dieses sowie das darunter befindliche Untersieb 11 sind in der Regel Lamellensiebe mit jeweils separat einstellbaren Öffnungsweiten, wobei das Obersieb 10 in einem hinteren Bereich mit einer anderen Öffnungsweite eingestellt werden kann als in seinem vorderen Bereich. Das Ober- sowie das Untersieb 10,11 werden von einem von dem Reinigungsgebläse 24 erzeugten Luftstrom durchsetzt. Die Schwingbewegung der Siebe 10,11 sowie der Luftstrom bewirken eine Förderung des Erntegutes sowie der Beimengungen zum hinteren Ende der Erntemaschine hin. Durch die Fallstufe 34 werden große und leichte Beimengungen von dem Luftstrom, bevor sie das Obersieb 10 erreichen, erfasst und aus dem Mähdrescher 1 abgeschieden. Kleinere und schwerere Erntegutbestandteile gelangen von dem Vorbereitungsboden 27 über die Fallstufe 34 auf das Obersieb 10. Je nach Einstellung der Obersiebweite, fallen die einzelnen Erntegutkörner und weitere Bestandteile des Erntegutes durch dieses hindurch und gelangen so auf das Untersieb 11. Stroh und nicht ausgedroschene Ähren werden über den vorderen Siebbereich hinweg bewegt und fallen im hinteren Bereich des Obersiebes 10 durch das Obersieb 10 direkt in die sogenannte Überkehr. Das Untersieb 11 besitzt in der Regel eine feinere Sieblamellenstruktur als das Obersieb 10 und wird normalerweise mit einer geringeren Öffnungsweite als das Obersieb 10 eingestellt. Größere und leichte Erntegutbestandteile, wie Erntegutkörner mit Spelz, Ährenteile oder Halmteile werden, sofern sie durch das Obersieb 10 auf das Untersieb 11 gelangt sind, durch die Schwingbewegung und den Luftstrom in die sogenannte Überkehr übergeben. Das gereinigte Erntegut selbst fällt direkt durch das Untersieb 11 hindurch und wird mittels einer Zuführschnecke und einem Kornelevator 13 in einen Korntank 33 gefördert. Das in die Überkehr gelangte Erntegut wird mittels einer Zuführschnecke und einem Überkehrelevator 12 oberhalb der Vorbeschleunigertrommel 5 erneut dem Dreschprozess zugeführt.

Der Mähdrescher 1 ist mit einer Fahrerkabine 35 ausgestattet, in welcher ein Anzeigeschirm 29 sowie eine Steuereinheit 30 mit integrierter Speichereinheit angeordnet sind. Ferner sind dort nicht näher dargestellte, dem Fachmann bekannte Einrichtung zur Vorgabe der Fahrtrichtung und Fahrgeschwindigkeit des Mähdreschers 1 vorhanden. Der Anzeigeschirm 29 sowie die Steuereinheit 30 stehen mit in dem Mähdrescher 1 an verschiedenen Orten angeordneten einzelnen Sensoren und Aktoren in Verbindung. Der Bediener des Mähdreschers 1 erhält hierdurch die Möglichkeit, Einstellparameter der einzelnen Arbeitsaggregate und somit die Funktionsweise des Mähdreschers 1 einstellen und überwachen zu können. In der Figur 1 werden durch Pfeilspitzen die einzelnen Stellen in dem Mähdrescher 1 angedeutet, an welchen ein Sensor zur Ermittlung von Prozess- und Einstellparameter angeordnet ist. Die jeweiligen Aktoren zur Einstellung des Mähdreschers 1, etwa zum Einstellen der Spaltweite des Dreschkorbs 8 und der Siebe 10, 11, des Abstands zwischen der Vorbeschleunigertrommel 5 und dem Dreschkorb 8 und/oder dem Dreschkorb 8 und der Dreschtrommel 6, der Drehzahl der Trommeln 6, 6, 7, der Leistung des Reinigungsgebläses 24, sind dem Fachmann ausreichend bekannt, so dass in Figur 1 auf die Darstellung des jeweiligen Elementes verzichtet werden kann.

An der Antriebsachse des Mähdreschers 1 ist eine Fahrgeschwindigkeitsmesseinrichtung 23 angeordnet, die die jeweilige Fahrgeschwindigkeit erfasst.

Dem Schneidwerk 2 ist eine Schnitthöhenmesseinrichtung 22 zugeordnet. Diese dient der Ermittlung des tatsächlichen Abstandes zwischen dem Schneidwerk 2 und der Bearbeitungsfläche 32. Der sensierte Wert kann mittels der Anzeigeinheit 29 dem Bediener angezeigt und ferner als Istwert für eine automatische Schnitthöhenregelung verwendet werden.

Zur Erfassung der Erntemenge ist in dem Schrägförderer 3 eine Erntemengenmesseinrichtung 20 angebracht. Diese ermittelt die von der Erntemenge abhängige Auslenkung der Einzugskette 4.

Eine weitere Sensorik ist an dem Dreschkorb 8 angeordnet. Diese Dreschkorbweitenmesseinrichtung 21 ist einfach oder mehrfach ausgebildet und ermittelt den Abstand zwischen der Vorbeschleunigertrommel 5 und dem Dreschkorb 8 und/oder der Dreschtrommel 6 und dem Dreschkorb 8 an einer oder mehreren Stellen.

Die Vorbeschleunigertrommel 5, die Dreschtrommel 6 und die Wendetrommel 7 werden in der Regel von einem gemeinsamen Antrieb angetrieben, wobei die Drehzahlen der Trommeln 5,6,7 über einen Stellantrieb variiert werden kann. Diesen Trommeln 5,6,7 ist eine Dreschtrommeldrehzahlmesseinrichtung 31 zur Erfassung zumindest einer der Trommeldrehzahlen zugeordnet.

Zur Erzeugung unterschiedlich starker Luftströme durch die Reinigungseinrichtung ist der Antrieb des Reinigungsgebläses 24 drehzahlvariabel ausgeführt. Die tatsächliche Drehzahl des Reinigungsgebläses 24 wird mittels einer Reinigungsgebläsemesseinrichtung 25 erfasst.

Der Reinigungseinrichtung können weitere Sensoren zugeordnet sein. So lässt sich auch die jeweilige

Sieböffnungsweite durch eine Obersiebweitenmesseinrichtung 18 und eine Untersiebweitenmesseinrichtung 26 erfassen. Diese Messeinrichtungen 18,26 können Teil der jeweiligen nicht dargestellten Einstelleinrichtung oder separat ausgeführt und jeweils am Sieb 10,11 angeordnet sein. Am hinteren Ende des Obersiebes 10 ist eine Obersiebverlustmesseinrichtung 17 angeordnet. Hiermit lassen sich anteilig die Erntegutkörner erfassen, die über die Reinigungseinrichtung hinweg den Mähdrescher 1 verlassen und als Verluste verloren gehen. Derartige Sensoren sind dem Fachmann bekannt und erstrecken sich teilweise oder komplett über die Arbeitsbreite der Reinigungseinrichtung. Sie sind normalerweise als Prallplatte oder -rohr ausgebildet und werten die Schwingungen aus, die durch Aufprall von Erntegutkörnern auf die Platte oder Röhre erzeugt werden. Diese Sensortechnik kann ferner an jeder beliebigen Stelle in einem Mähdrescher 1 eingesetzt und angeordnet werden. Hierdurch lassen sich dann Erntegutkörnerströme erfassen und ermöglichen zumindest eine vergleichende und relative Aussage über die am Einsatzort herrschenden Körnermengen. So wird diese Sensortechnik auch in den Schüttlern 9 zur Erfassung der Abscheidung eingesetzt. Um eine Aussage über die noch im Stroh befindlichen Erntegutkörner zu erhalten, ist zumindest am hinteren Ende eines Schüttlers 9 ein Schüttlerverlustsensor 19 befestigt. Dieser erfasst anteilig die noch am Ende des Schüttlers 9 abgeschiedenen Erntegutkörner. Auch zur Beurteilung der Erntegutkörnermenge in der Überkehr lässt sich eine solche Prallplatten-Sensorik am Ende des Untersiebes 11 oder an der Stelle der Rückführung der Überkehr in den Dreschprozess anordnen.

Zur Beurteilung der in der Überkehr befindlichen Erntegutbestandteile ist eine Überkehrmesseinrichtung 16 am oberen Ende des Überkehrelevators 12 angeordnet. Hiermit lassen sich das Überkehrvolumen, der Korn- und der Bruchkornanteil bestimmen. Bekannt sind hierfür optische Lichtschranken, optische Sensoren oder Durchleuchtungssensoren (NIR-Sensoren).

Der Kornelevator 13 ist mit weiteren Sensoren 14,15 ausgestattet, welche die Ermittlung der Fördermenge durch ein Ertragsmesssystem 14 sowie die Ermittlung des spezifischen Gewichtes des Erntegutes durch eine Kalibrierwaage 15 erlauben.

Wie anhand der vorstehenden Beschreibung der Funktionsweise des Mähdreschers 1 zu erkennen ist, bestehen für den Bediener des Mähdreschers 1 eine Vielzahl von Möglichkeiten, Einstellparameter der einzelnen Arbeitsaggregate zu beeinflussen.

Unter "Arbeitsaggregat" werden im Sinne der Erfindung sämtliche Bauelemente und/oder Steuerelemente eines landwirtschaftlichen Arbeitsfahrzeuges verstanden, die eine bestimmte Funktion zur Erreichung eines Arbeitsergebnisses der Arbeitsmaschine erfüllen. Diese Arbeitsaggregate können am vorgenannten Beispiel des Mähdreschers 1 beispielhaft das Getreideschneidwerk 2, der Schrägförderer 3, die Einzugsketten 4, die Vorbeschleunigertrommel 5, die Dreschtrommel 6, die Wendetrommel 7, der Dreschkorb 8, die Schüttler 9, das Obersieb 10, das Untersieb 11, der Überkehrelevator 12, der Kornelevator 13, das Reinigungsgebläse 24, der Vorbereitungsboden 27 und/oder der Rücklaufboden 28 sein. Auch eine Gruppe von zusammenwirkenden Einzelarbeitsaggregaten werden im Sinne der Erfindung als Arbeitsaggregat bezeichnet. Dies kann beispielsweise die durch das Obersieb 10, das Untersieb 11 und das Reinigungsgebläse 24 gebildete Reinigungseinrichtung des Mähdreschers 1 sein. Aber auch die unterschiedlichen in der Arbeitsmaschine befindlichen Sensoren und Messsysteme, wie beispielsweise das Ertragsmesssystem 14, die Kalibrierwaage 15, die Überkehrmesseinrichtung 16, die Obersiebverlustmesseinrichtung 17, die Obersiebweitenmesseinrichtung 18, der Schüttlerverlustsensor 19, die Erntemengenmesseinrichtung 20, die Dreschkorbweitenmesseinrichtung 21, die Schnitthöhenmesseinrichtung 22, die Fahrgeschwindigkeitsmesseinrichtung 23, die Reinigungsgebläsemesseinrichtung 25, die Untersiebweitenmesseinrichtung 26 und/oder die Dreschtrommeldrehzahlmesseinrichtung 31, sind im Sinne der Erfindung als Arbeitsaggregate anzusehen.

Unter "Einstellparameter" werden im Sinne der Erfindung jedwede Größen oder Eigenschaften der landwirtschaftlichen Maschine bzw. ihrer Arbeitsaggregate verstanden, auf die der Bediener direkt, für sich allein oder auch verknüpft mit anderen Größen, Einfluss nehmen kann, insbesondere solche Größen oder Eigenschaften, denen an der Steuereinheit 30 ein Regler zugeordnet ist. In erster Linie kommen als Einstellparameter kontinuierlich veränderbare Größen wie etwa eine Drehzahl, z.B. einer der Trommeln 5, 6, 7 oder des Reinigungsgebläses 24, eine Frequenz, z.B. des Schüttlers 9, der Siebe 10, 11 oder der Böden 27, 28 und/oder eine Geschwindigkeit und/oder ein Abstand und/oder ein Druck und/oder eine Erntegutdurchsatzmenge eines Arbeitsaggregates in Betracht, um nur einige Möglichkeiten zu nennen. Es kann sich aber auch um diskrete Größen handeln, wie etwa das Ein- oder Ausgeschaltetsein eines Zusatzaggregats etc..

Als "Betriebsparameter" werden bevorzugt diejenigen Parameter aufgefasst, die nicht in einem eindeutigen Zusammenhang mit dem Wert eines einzelnen Einstellparameters stehen, sondern über verschiedene Einstellparameter beeinflussbar sind. Hier kommen insbesondere Parameter in Betracht, deren Wert mit der Qualität des Produkts der Arbeit bzw. mit dem wirtschaftlichen Ertrag der Arbeit des Arbeitsfahrzeugs zusammenhängt, wie etwa die Reinheit des Ernteguts, der Bruchkornanteil, Erntegutverluste am Schüttler 9 oder am Obersieb 10, Überkehrmenge, etc. Darüber hinaus können auch von den oben genannten Größen unter Berücksichtigung wirtschaftlicher externer Randbedingungen abgeleitete Größen Betriebsparameter sein, wie etwa ein unter Berücksichtigung aktueller Abnahmepreise des Ernteguts in Abhängigkeit von Reinheit und Bruchkornanteil zu erwartender Verkaufserlös, oder ein unter Berücksichtigung von Maschinenbetriebs- und Personalkosten von diesem Verkaufserlös abgeleiteter Reingewinn.

Unter "Bediener" wird im Sinne der Erfindung diejenige Person oder eine Mehrzahl von Personen verstanden, die Einstellparameter der Arbeitsaggregate eines landwirtschaftlichen Arbeitsfahrzeuges beeinflussen können, und denen ein gemessener Wert eines oder mehrerer Betriebsparameter angezeigt wird. Dies kann der Fahrer des landwirtschaftlichen Arbeitsfahrzeuges selbst sein und/oder ein Fahrer eines anderen landwirtschaftlichen Arbeitsfahrzeuges, der mittels geeigneter Übertragungsmittel einen autorisierten Zugriff auf die Steuereinheit des einzustellenden Arbeitsfahrzeuges hat und/oder ein weiterer Personenkreis, wie beispielsweise ein Landwirt von seinem Hofrechner aus, der mittels geeigneter Übertragungsmittel mit der Steuereinheit des einzustellenden Arbeitsfahrzeuges kommuniziert. Diese Auflistung der möglichen Bediener ist beispielhaft und nicht als abschließend anzusehen.

Im Folgenden soll der Einfachheit wegen davon ausgegangen werden, dass der Bediener der Fahrer des Mähdreschers 1 ist, und dass die Steuereinheit 30 die erfindungsgemäße Steuereinheit verkörpert. Eine Implementierung, bei der zum Beispiel der Hofrechner als Steuereinheit fungiert, ist für den Fachmann anhand der nachfolgenden Erläuterungen offensichtlich.

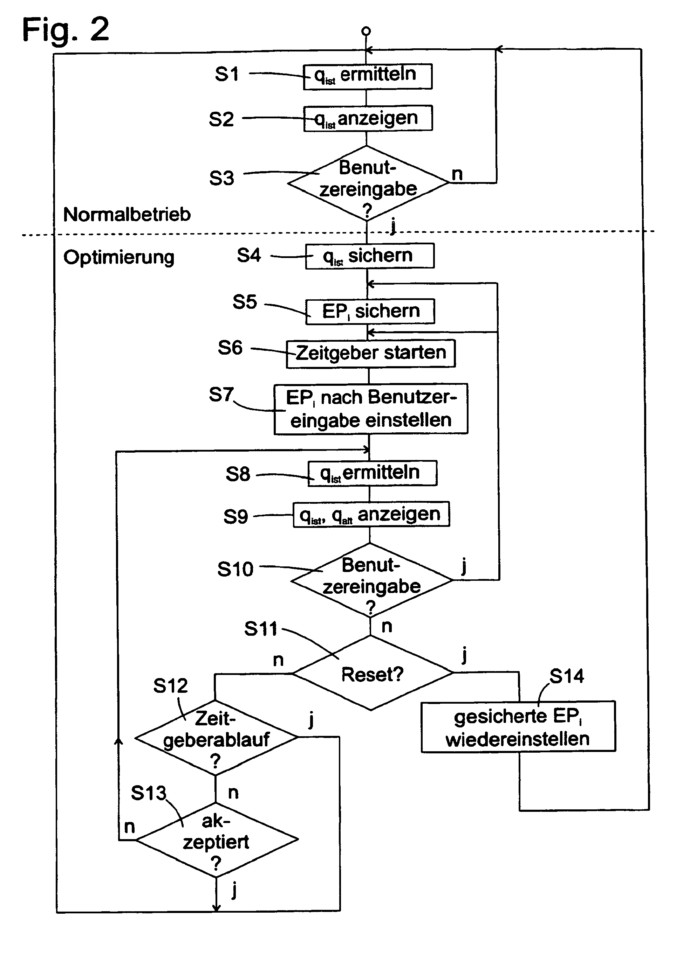

Fig. 2 zeigt ein Flussdiagramm eines auf der Steuereinheit 30 ablaufenden Arbeitsverfahrens. Ein erster Schritt S1 des zyklisch ablaufenden Verfahrens ist die Ermittlung des aktuellen Werts qᵢₛₜ eines Betriebsparameter q. Die Ermittlung kann eine direkte Messung durch einen Sensor, zum Beispiel einen der Sensoren 14 bis 17 oder 19 sein, oder es kann sich um eine Berechnung handeln, die auf Ergebnissen dieser und eventuell weiterer Sensoren sowie eventuell zusätzlich auf externen Randbedingungen wie etwa Abnahmepreisen, Treibstoffkosten, etc. basiert. Das Ergebnis der Berechnung wird in Schritt S2 auf dem Anzeigeschirm 29 dem Fahrer dargestellt. Der Fahrer hat die Möglichkeit, den Betriebsparameter q durch Variieren diverser Einstellparameter EP₁, ..., EPₙ an den Reglern der Steuereinheit 30 zu optimieren. Solange er dies nicht tut, bleibt die Steuereinheit 30 in einem Normalbetriebsmodus, in welchem sich die Schritte S1, S2 und ein Schritt S3 des Überprüfens, ob der Fahrer eine Eingabe zum Ändern eines Einstellparameters gemacht, sich zyklisch wiederholen.

Wenn die Steuereinheit 30 in Schritt S3 eine Eingabe des Fahrers erkennt, die auf die Änderung eines beliebigen Einstellparameters EPᵢ, i=1, 2, ..., n abzielt, wechselt sie in einen Optimierungsbetriebsmodus, in welchem sie zunächst in Schritt S4 den aktuellen Wert qᵢₛₜ des Betriebsparameters q in der integrierten Speichereinheit sichert. Als Nächstes wird in Schritt S5 der aktuelle Wert des Einstellparameters EPᵢ gesichert, den der Fahrer verändern will. In Schritt S6 wird ein Zeitgeber gestartet, der ein Zeitintervall markiert, dessen Dauer ein Mehrfaches der Zeit ist, die der Mähdrescher 1 nach dem Ändern eines Einstellparameters benötigt, um wieder in einen stationären Betriebszustand zu gelangen, in dem die von seinen diversen Sensoren gemessenen Werte die aktuellen Einstellungen der diversen Einstellparameter korrekt widerspiegeln

In Schritt S7 steuert die Steuereinheit 30 einen dem gewählten Einstellparameter EPᵢ zugeordneten Aktor an, um diesen auf den von Fahrer gewählten Wert einzustellen. Anschließend wird wie in Schritt S1 der aktuelle Wert qᵢₛₜ des Betriebsparameters q ermittelt. Angezeigt werden in Schritt S9 auf dem Anzeigeschirm 29 sowohl der in Schritt S8 ermittelte Wert qist des Parameters q als auch sein in Schritt S4 gesicherter Wert qₐₗₜ. In Schritt S10 überprüft die Steuereinheit 30, ob eine neue Bedienereingabe betreffend denselben Einstellparameter EPᵢ oder einen anderen Einstellparameter vorliegt. Wenn die Eingabe denselben Einstellparameter EPᵢ betrifft, kehrt das Verfahren zu Schritt S6 zurück, im Falle eines anderen Einstellparameters EPⱼ zu Schritt S5, um den aktuellen Wert auch dieses Parameters zu sichern. (Alternativ könnte beim Wechsel in den Optimierungsbetriebsmodus in Schritt S5 die Gesamtheit der Einstellparameter EP₁, ..., EPₙ gesichert werden; dann könnte das Verfahren in Schritt S10 bei einer Änderung egal welchen Einstellparameters stets zu Schritt S6 zurückkehren.)

Wenn keine spezifisch auf einen Einstellparameter bezogene Eingabe des Fahrers vorliegt, wird in Schritt S11 noch abgeprüft, ob der Fahrer womöglich eine Rücksetztaste der Steuereinheit 30 betätigt hat. Wenn die Rücksetztaste unbetätigt ist und in Schritt S12 festgestellt wird, dass auch der Zeitgeber noch nicht abgelaufen ist, überprüft das Verfahren in Schritt S13 die Betätigung einer Übernahmetaste der Steuereinheit 30. Ist auch diese unbetätigt, so kehrt das Verfahren zu Schritt S8 zurück. Indem so die Schritte S8 bis S13 periodisch durchlaufen werden, werden dem Fahrer kontinuierlich die aktuellen Werte des Parameters q angezeigt, die sich infolge der Einstellparameteränderung allmählich verändern. Anhand eines Vergleichs der angezeigten Werte q, qₐₗₜ kann der Fahrer entscheiden, ob seine Eingabe zu einer Verbesserung des Betriebsparameters q geführt hat oder nicht. Wenn ja, wird der Fahrer die Veränderung des Einstellparameters EPᵢ beibehalten. In diesem Fall braucht er nichts weiter zu unternehmen, da, sobald in Schritt S12 der Ablauf des Zeitgebers festgestellt wird, die Steuereinheit 30 automatisch in den Normalbetriebsmodus, zum Schritt S1 zurückkehrt. Darüber hinaus hat der Fahrer die Möglichkeit, die Übernahmetaste zu betätigen, um zu signalisieren, dass er die Änderung des Einstellparameters EPᵢ beibehalten will. Wenn die Steuereinheit 30 dies in Schritt S13 erkennt, kehrt sie bereits vor Ablauf des Zeitgebers zum Schritt S1 zurück. Wenn der Fahrer nun eine erneute Änderung desselben oder eines anderen Einstellparameters vornimmt, wird der zum Zeitpunkt dieser neuerlichen Änderung erreichte Wert des Betriebsparameters q durch eine neuerliche Ausführung des Schritts S4 gesichert und kann als Vergleichsmaßstab für weitere Änderungen dienen.

Häufig genügt die Veränderung eines einzelnen Einstellparameters nicht, um tatsächlich eine Verbesserung eines Betriebsparameters zu erzielen. In diesem Fall wird der Fahrer im Allgemeinen in zügiger Folge, jeweils vor Ablauf des Zeitgebers, und ohne die Übernahmetaste zu betätigen, mehrere Einstellparameter EPᵢ, EPⱼ,... verändern. In diesem Fall gewährleistet der oben beschriebene Verfahrensablauf, dass sämtliche Werte, die die veränderten Einstellparameter EPᵢ, EPⱼ,... vor dem Eintritt in den Optimierungsbetriebsmodus hatten, gespeichert bleiben. Wenn der Fahrer nach dem Verändern einer Mehrzahl von Einstellparametern feststellt, dass er keine Verbesserung von q hat erzielen können, genügt es, die Rücksetztaste zu betätigen. Wenn die Steuereinheit 30 dies in Schritt S11 erkennt, stellt sie sämtliche zuvor gesicherten Werte der veränderten Einstellparameter EPᵢ, EPⱼ,... in Schritt S14 wieder ein, so dass der Zustand vor Beginn des Optimierungsversuchs wieder hergestellt wird.

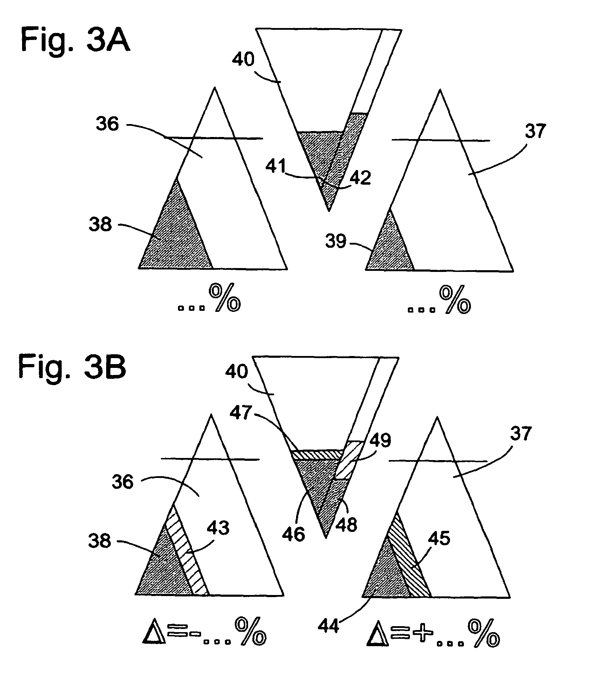

Fig. 3a zeigt exemplarisch ein mögliches Bild, das dem Fahrer auf dem Anzeigeschirm 29 im Normalbetriebsmodus angezeigt wird. Helle Dreiecke 36, 37 stellen Anzeigefelder für vom Schüttlerverlustsensor 19 bzw. der Obersiebverlustmesseinrichtung 17 erfasste Kornverluste als Beispiele für Betriebsparameter des Mähdreschers 1 dar. Die Fläche eines schwarz angezeigten Dreiecks 38 bzw. 39 in der unteren linken Ecke der Dreiecke 36, 37 ist proportional zu den aktuell gemessenen tatsächlichen Verlusten. In einem weiteren Anzeigefeld 40 stellt ein schwarzes Dreieck 41 ein von der Überkehrmesseinrichtung 16 erfasstes Überkehrvolumen und ein daneben liegender schwarzer Balken 42 die Überkehrmasse dar.

Fig. 3b zeigt ein Anzeigebild des Anzeigeschirms 29, das sich im Optimierungsbetriebsmodus ausgehend von den in Fig. 3a dargestellten Werten der Kornverluste, des Überkehrvolumens und der Überkehrmasse durch die Änderung eines oder mehrerer Einstellparameter ergeben kann. Beim Schüttlerverlust wurde eine Verbesserung erzielt. Das den aktuellen Wert des Schüttlerverlusts darstellende schwarze Dreieck 38 ist verkleinert, und ein daran angrenzender Balken 43 erscheint in grüner Farbe, um den Fortschritt augenfällig zu machen. Das dunkle Dreieck und der Balken 43 belegen zusammen die gleiche Fläche wie das Dreieck 38 in Fig. 3a. D.h. je stärker die Verbesserung, um so mehr grün ist zu sehen.

Beim Obersiebverlust ist eine Verschlechterung eingetreten. Das schwarze Dreieck 44 in Fig. 3b ist flächengleich mit dem Dreieck 39 der Fig. 3a, und der Zuwachs der Verlustrate ist symbolisiert durch einen in roter Farbe dargestellten angrenzenden Balken 45. Die Fläche des Dreiecks 44 und des Balkens 45 zusammen repräsentiert den aktuellen Wert des Obersiebverlusts.

Eventuell können die Änderungen auch als Zahlenwerte, in Prozenten oder in Prozentpunkten, dargestellt sein, wobei ein negatives Vorzeichen beim Schüttlerverlust die Abnahme der Verluste und ein positives beim Obersiebverlust die Zunahme anzeigt.

Ein entsprechendes Anzeigeschema wird auch für die Überkehrparameter verwendet: neben einem schwarzen Dreieck 46, das mit dem Dreieck 41 der Fig. 3a flächengleich ist, zeigt ein roter Balken 47 eine Zunahme des Überkehrvolumens an. Gleichzeitig wurde aber eine Verringerung der Überkehrmasse erreicht, daher ist das schwarze Feld 48 in Fig. 3b kleiner als der Balken 42 der Fig. 3a, und das Feld 48 sowie eine in grün dargestelltes Nachbarfeld 49 belegen zusammen die Fläche des Balkens 42. So kann der Fahrer mit einem Blick anhand der Farbverteilung auf dem Anzeigefeld 29 erkennen, ob eine Parameteränderung vorteilhaft gewesen ist und beibehalten werden sollte, oder ob weitere Änderungen erforderlich sind oder der Optimierungsversuch abgebrochen werden sollte.

### Bezugszeichen

- 1: Mähdrescher
- 2: Getreideschneidwerk
- 3: Schrägförderer
- 4: Einzugskette
- 5: Vorbeschleuniger/Dreschtrommel
- 6: Dreschtrommel
- 7: Wendetrommel
- 8: Dreschkorb
- 9: Schüttler
- 10: Obersieb
- 11: Untersieb
- 12: Überkehrelevator
- 13: Kornelevator
- 14: Sensor Ertragsmesssystem
- 15: Sensor Dichte(Kalibrierwaage)
- 16: Überkehrmesseinrichtung
- 17: Obersiebverlustmesseinrichtung
- 18: Obersiebverlustweitenmesseinrichtung
- 19: Schüttlerverlustsensor
- 20: Erntemengenmesseinrichtung
- 21: Dreschkorbweitenmesseinrichtung
- 22: Schnitthöhenmesseinrichtung
- 23: Fahrgeschwindigkeitsmesseinrichtung
- 24: Reinigungsgebläse
- 25: Reinigungsgebläsemesseinrichtung
- 26: Untersiebweitenmesseinrichtung
- 27: Vorbereitungsboden
- 28: Rücklaufboden
- 29: Anzeigeschirm
- 30: Steuereinheit
- 31: Dreschtrommeldrehzahlmesseinrichtung
- 32: Bearbeitungsfläche
- 33: Korntank
- 34: Fallstufe
- 35: Fahrerkabine
- 36: Dreieck
- 37: Dreieck
- 38: Dreieck
- 39: Dreieck
- 40: Anzeigefeld
- 41: Dreieck
- 42: Balken
- 43: Balken
- 44: Dreieck
- 45: Balken
- 46: Dreieck
- 47: Balken
- 48: Feld
- 49: Feld

## Patentansprüche

1. Anzeigeeinheit (29) für ein landwirtschaftliches Arbeitsfahrzeug (1) zum Anzeigen wenigstens eines Betriebsparameters (q) des Arbeitsfahrzeugs, der in Abhängigkeit von einem oder mehreren Einstellparametern (EP₁) des Arbeitsfahrzeugs veränderlich ist, wobei die Anzeigeeinheit (29) eingerichtet ist, eine aus einer Veränderung wenigstens eines der Einstellparameter (EP₁) resultierende Veränderung des Betriebsparameters (q) anzuzeigen, und die Veränderung des Betriebsparameters (q) durch gleichzeitige Darstellung eines Wertes des Betriebsparameters vor der Veränderung (qₐₗₜ) und eines Wertes des Betriebsparameters nach der Veränderung (qᵢₛₜ) darzustellen, **dadurch gekennzeichnet, dass** die Anzeigeeinheit (29) dazu eingerichtet ist, eine erste Figur (43; 45; 47; 49) anzuzeigen, von der eine Abmessung für den Betrag der Veränderung des Betriebsparameters repräsentativ ist und von der eine Eigenschaft je nach Vorzeichen der Veränderung des Betriebsparameters zwei diskrete Werte annimmt, und eine zweite Figur (38; 44; 46; 48) anzuzeigen, deren Abmessung für den jeweils kleineren der besagten Werte (qalt, qist) repräsentativ ist.

2. Anzeigeeinheit nach Anspruch 1, **dadurch gekennzeichnet, dass** die Eigenschaft die Farbe oder ein Flächenmuster der ersten Figur (43; 45; 47; 49) ist.

3. Anzeigeeinheit nach einem der Ansprüche 1 oder 2, **dadurch gekennzeichnet, dass** die Abmessung eine Länge der Figuren (48, 49) ist und die Figuren in Richtung der Länge nebeneinander auf der Anzeigeeinheit (29) angezeigt werden.

4. Anzeigeeinheit nach einem der Ansprüche 1 bis 3, **dadurch gekennzeichnet, dass** die Abmessung eine Fläche der Figuren (38, 43; 44, 45; 46, 47) ist und die Figuren (38, 43; 44, 45; 46, 47) aneinander angrenzend auf der Anzeigeeinheit (29) angezeigt werden.

5. Anzeigeeinheit nach einem der Ansprüche 1 bis 4, **dadurch gekennzeichnet, dass** der umriss der ersten Figuren (38, 43; 44, 45; 46n 47) der zweiten Figur ähnlich ist.

6. Anzeigeeinheit nach einem der vorhergehenden Ansprüche, **dadurch gekennzeichnet, dass** sie mit wenigstens einem Sensor (14, 16, 17, 18, 19, 20) zum Ermitteln des aktuellen Werts (qist) des Betriebsparameters (q) verbunden und eingerichtet ist, die angezeigte Veränderung des Betriebsparameters (q) anhand des ermittelten aktuellen Werts (qist) des Betriebsparameters laufend zu aktualisieren.

7. Anzeigeeinheit nach einem der vorhergehenden Ansprüche, **dadurch gekennzeichnet, dass** sie mit einem Bedienelement verbunden ist, an dem ein Wert für wenigstens einen den Betriebsparameter (q) beeinflussenden Einstellparameter (EPi) des Fahrzeugs durch einen Bediener eingebbar ist und dass sie eingerichtet ist, diejenige Veränderung des Betriebsparameters (q) anzuzeigen, die aus einer am Bedienelement eingegebenen Veränderung des wenigstens einen Einstellparameters (EPi) resultiert.

8. Anzeigeeinheit nach Anspruch 7, **gekennzeichnet durch** ein Speicherelement zum Speichern des Werts (qalt) des Betriebsparameters (q) zum Zeitpunkt der Eingabe der Veränderung des Einstellparameters (EPi) am Bedienelement.

9. Anzeigeeinheit nach Anspruch 7, **dadurch gekennzeichnet, dass** sie ferner eingerichtet ist, eine Änderung eines Einstellparameters (EPi) an einem Arbeitsaggregat des Arbeitsfahrzeugs vorzunehmen, einen vor der Änderung gültigen ursprünglichen Wert des Einstellparameters (EPi) zu speichern und in Reaktion auf den Empfang eines Rücksetzbefehls die Änderung des Einstellparameters an dem Arbeitsaggregat rückgängig zu machen (S14).

10. Anzeigeeinheit nach Anspruch 9, **dadurch gekennzeichnet, dass** sie ferner eingerichtet ist, auf einen Befehl des Bedieners (S13) oder nach Verstreichen einer Wartezeit (S12) den gespeicherten Wert des Einstellparameters (EPi) durch den veränderten Wert zu ersetzen.

11. Anzeigeeinheit nach Anspruch 8, **dadurch gekennzeichnet, dass** nach dem Speichern des Werts des Betriebsparameters ein erneutes Speichern dieses Werts während einer vorgegebenen Zeitspanne (S12) oder bis zur Eingabe eines Freigabebefehls (S13) durch den Bediener gesperrt ist.

12. Landwirtschaftliches Arbeitsfahrzeug (1) mit einer Anzeigeeinheit (29) nach einem der vorhergehenden Ansprüche.

13. Landwirtschaftliches Arbeitsfahrzeug nach Anspruch 12, **dadurch gekennzeichnet, dass** es ein Mähdrescher ist.

14. Landwirtschaftliches Arbeitsfahrzeug nach Anspruch 13, **dadurch gekennzeichnet, dass** die ein oder mehrere Einstellparameter (EPi)auf wenigstens ein Arbeitsaggregat bezogen sind, das unter Dreschtrommel (6), Dreschkorb (8), Sieb (10, 11), Reinigungsgebläse (24) und der Einstellparameter unter Dreschtrommeldrehzahl, Dreschkorbweite, Siebweite und Gebläseleistung ausgewählt ist.

15. Landwirtschaftliches Arbeitsfahrzeug nach einem der Ansprüche 13 oder 14, **dadurch gekennzeichnet, dass** der Betriebsparameter (q) unter Ernteleistung, Kornverlust, Bruchkornanteil und Überkehrmenge ausgewählt ist.

## Claims

1. A display unit (29) for an agricultural working vehicle (1) for displaying at least one operating parameter (q) of the working vehicle, that is variable in dependence on one or more setting parameters (EPᵢ) of the working vehicle, wherein the display unit (29) is adapted to display a variation in the operating parameter (q) resulting from a variation in at least one of the setting parameters (EPᵢ) and to represent the variation in the operating parameter (q) by simultaneous representation of a value of the operating parameter prior to the variation (qₐₗₜ) and a value of the operating parameter after the variation (qᵢₛₜ), **characterised in that** the display unit (29) is adapted to display a first figure (43; 45; 47; 49) of which a dimension is representative of the magnitude of the variation in the operating parameter and of which a property assumes two discrete values respectively depending on the sign of the variation in the operating parameter and to display a second figure (38; 44; 46; 48) whose dimension is representative of the respectively smaller one of said values (qalt, qist).

2. A display unit according to claim 1 **characterised in that** the property is the colour or a surface pattern of the first figure (43; 45; 47; 49).

3. A display unit according to one of claims 1 and 2 **characterised in that** the dimension is a length of the figures (48, 49) and the figures are displayed in the direction of the length in mutually juxtaposed relationship on the display unit (29).

4. A display unit according to one of claims 1 to 3 **characterised in that** the dimension is an area of the figures (38, 43; 44, 45; 46, 47) and the figures (38, 43; 44, 45; 46, 47) are displayed in mutually adjoining relationship on the display unit (29).

5. A display unit according to one of claims 1 to 4 **characterised in that** the outline of the first figures (38, 43; 44, 45; 46, 47) is similar to the second figure.

6. A display unit according to one of the preceding claims **characterised in that** it is connected to at least one sensor (14, 16, 17, 18, 19, 20) for ascertaining the current value (qist) of the operating parameter (q) and is adapted to continuously update the displayed variation in the operating parameter (q) on the basis of the ascertained current value (qist) of the operating parameter.

7. A display unit according to one of the preceding claims **characterised in that** it is connected to an operating element at which a value for at least one setting parameter (EPi) which influences the operating parameter (q) of the vehicle can be input by an operator and it is adapted to display that variation in the operating parameter (q) that results from a variation input at the operating element in the at least one setting parameter (EPi).

8. A display unit according to claim 7 **characterised by** a memory element for storage of the value (qalt) of the operating parameter (q) at the moment of the input of the variation in the setting parameter (EPi) at the operating element.

9. A display unit according to claim 7 **characterised in that** it is further adapted to perform a change in a setting parameter (EPi) at a working assembly of the working vehicle, to store an original value of the setting parameter (EPi), that applied prior to the change, and to cancel the change in the setting parameter at the working assembly in response to reception of a reset command (S14).

10. A display unit according to claim 9 **characterised in that** it is further adapted to replace the stored value of the setting parameter (EPi) by the varied value upon a command from the operator (S13) or after the elapse of a waiting time (S12).

11. A display unit according to claim 8 **characterised in that** after storage of the value of the operating parameter renewed storage of that value is blocked during a predetermined period of time (S12) or until the input of an enable command (S13) by the operator.

12. An agricultural working vehicle (1) having a display unit (29) according to one of the preceding claims.

13. An agricultural working vehicle according to claim 12 **characterised in that** it is a combine harvester.

14. An agricultural working vehicle according to claim 13 **characterised in that** the one or more setting parameters (EPi) are related to at least one working assembly selected from a threshing drum (6), a concave (8), a sieve (10, 11), a cleaning fan (21) and the setting parameter is selected from the threshing drum speed, the concave width, the sieve width and the fan output power.

15. An agricultural working vehicle according to one of claims 13 and 14 **characterised in that** the operating parameter (q) is selected from crop yield, grain loss, proportion of damaged grain and tailings amount.

## Revendications

1. Unité d'affichage (29) pour un engin agricole (1) destinée à afficher au moins un paramètre d'exploitation (q) de l'engin, lequel paramètre est variable en fonction d'un ou plusieurs paramètres de réglage (EPᵢ) de l'engin, l'unité d'affichage (29) étant agencée pour afficher une variation du paramètre d'exploitation (q) résultant d'une variation d'au moins un des paramètres de réglage (EPᵢ) et pour visualiser la variation du paramètre d'exploitation (q) par une visualisation simultanée d'une valeur du paramètre d'exploitation avant la variation (qₐₗₜ) et d'une valeur du paramètre d'exploitation après la variation (qᵢₛₜ), **caractérisée en ce que** l'unité d'affichage (29) est agencée pour afficher une première figure (43 ; 45 ; 47 ; 49) dont une dimension est représentative de l'ampleur de la variation du paramètre d'exploitation et dont une propriété adopte deux valeurs discrètes selon le signe de la variation du paramètre d'exploitation, et une seconde figure (38 ; 44 ; 46 ; 48) dont la dimension est à chaque fois représentative de la plus petite desdites valeurs (qₐₗₜ, qᵢₛₜ).

2. Unité d'affichage selon la revendication 1, **caractérisée en ce que** la propriété est la couleur ou un motif de surface de la première figure (43 ; 45 ; 47 ; 49).

3. Unité d'affichage selon une des revendications 1 ou 2, **caractérisée en ce que** la dimension est une longueur des figures (48, 49) et, sur l'unité d'affichage (29), les figures sont affichées côte à côte dans le sens de la longueur.

4. Unité d'affichage selon une des revendications 1 à 3, **caractérisée en ce que** la dimension est une surface des figures (38, 43 ; 44, 45 ; 46, 47) et, sur l'unité d'affichage (29), les figures (38, 43 ; 44, 45 ; 46, 47) sont affichées de façon contiguë les unes par rapport aux autres.

5. Unité d'affichage selon une des revendications 1 à 4, **caractérisée en ce que** la forme des premières figures (38, 43 ; 44, 45 ; 46, 47) est identique à celle de la seconde figure.

6. Unité d'affichage selon une des revendications précédentes, **caractérisée en ce qu'**elle est connectée à au moins un capteur (14, 16, 17, 18, 19, 20) pour déterminer la valeur instantanée (qᵢₛₜ) du paramètre d'exploitation (q) et agencée pour actualiser en continu la variation affichée du paramètre d'exploitation (q) à l'aide de la valeur instantanée déterminée (qᵢₛₜ) du paramètre d'exploitation.

7. Unité d'affichage selon une des revendications précédentes, **caractérisée en ce qu'**elle est connectée à un élément d'utilisation par l'intermédiaire duquel une valeur pour au moins un paramètre de réglage (EPᵢ) du véhicule influençant le paramètre d'exploitation (q) peut être entrée par un utilisateur, et **en ce qu'**elle est agencée pour afficher la variation du paramètre d'exploitation (q) résultant d'une variation du au moins un paramètre de réglage (EPi) entrée par l'intermédiaire de l'élément d'utilisation.

8. Unité d'affichage selon la revendication, **caractérisée par** un élément de mémorisation pour mémoriser la valeur (qₐₗₜ) du paramètre d'exploitation (q) au moment de l'entrée de la variation du paramètre de réglage (EPi) par l'intermédiaire de l'élément d'utilisation.

9. Unité d'affichage selon la revendication 7, **caractérisée en ce qu'**elle est également agencée pour effectuer une modification d'un paramètre de réglage (EPi) au niveau d'un équipement de travail de l'engin, pour mémoriser une valeur initiale du paramètre de réglage (EPi) valable avant la modification et pour annuler, en réaction à la réception d'une instruction de réinitialisation (S14), la modification du paramètre de réglage effectuée au niveau de l'équipement de travail.

10. Unité d'affichage selon la revendication 9, **caractérisée en ce qu'**elle est également agencée pour remplacer la valeur mémorisée du paramètre de réglage (EPi) par la valeur modifiée en réponse à une instruction de l'utilisateur (S13) ou après écoulement d'un temps d'attente (S12).

11. Unité d'affichage selon la revendication 8, **caractérisée en ce que**, après la mémorisation de la valeur du paramètre d'exploitation, une nouvelle mémorisation de cette valeur est interdite pendant un laps de temps prédéfini (S12) ou jusqu'à l'entrée d'une instruction de validation (S13) par l'utilisateur.

12. Engin agricole (1) comprenant une unité d'affichage (29) selon une des revendications précédentes.

13. Engin agricole selon la revendication 12, **caractérisé en ce qu'**il s'agit d'une moissonneuse-batteuse.

14. Engin agricole selon la revendication 13, **caractérisé en ce que** les un ou plusieurs paramètres de réglage (EPi) se réfèrent à au moins un équipement de travail choisi parmi le batteur (6), le contre-batteur (8), le tamis (10, 11), le ventilateur de nettoyage (24), et le paramètre de réglage est choisi parmi la vitesse de rotation de batteur, la largeur du contre-batteur, la largeur de tamis et la puissance du ventilateur.

15. Engin agricole selon une des revendications 13 ou 14, **caractérisé en ce que** le paramètre d'exploitation (q) est choisi parmi le rendement de récolte, la perte de grain, la proportion de grains cassés et la quantité du retour à ôtons.
